# EUROPEAN PATENT APPLICATION

(11) **EP 4 411 053 A1**
(43) Date of publication of application: **07.08.2024**
(21) Application number: 22933788.6
(22) Date of filing: 20.12.2022
(51) Int. Cl.: D06F 58/22, D06F 39/10, B01D 46/682, B01D 46/00, B01D 46/72

(54) **CLOTHING PROCESSING APPARATUS**

(30) Priority: 22.03.2022 KR 20220035556; 14.06.2022 KR 20220072446
(71) Applicant: Samsung Electronics Co., Ltd., Suwon-si, Gyeonggi-do 16677 (KR)
(72) Inventor: JANG, Incheol, Suwon-si, Gyeonggi-do 16677 (KR); KIM, Jaehoon, Suwon-si, Gyeonggi-do 16677 (KR); PARK, Byengbae, Suwon-si, Gyeonggi-do 16677 (KR); SUNG, Jonghun, Suwon-si, Gyeonggi-do 16677 (KR); CHUN, Kwangmin, Suwon-si, Gyeonggi-do 16677 (KR); JO, Youngchul, Suwon-si, Gyeonggi-do 16677 (KR)
(74) Representative: Walaski, Jan Filip
(86) International application number: PCT/KR2022/020845
(87) International publication number: WO 2023/182620

(57) **Abstract**

A clothes treating apparatus capable of improving filter cleaning efficiency by a cleaning nozzle. The clothes treating apparatus includes: a cabinet; a tub inside the cabinet, being in a shape of a cylinder, and including an air outlet formed in a circumference of the tub and a tub duct protruding outward from the tub and configured to guide air discharged through the air outlet, the tub duct having a duct opening formed in a side of the tub duct; a filter case to which a filter is installed to filter a foreign material included in air passing through the air outlet, the filter case coupled to the tub duct; and a cleaning nozzle including a nozzle inserted into the tub duct through the duct opening to be positioned inside the tub duct and configured to spray water toward the filter.

## Description

### [Technical Field]

The disclosure relates to a clothes treating apparatus for washing and drying clothes.

### [Background Art]

A clothes treating apparatus is an appliance for washing and drying laundry by performing washing, rinsing, dehydrating, and drying operations.

Clothes treating apparatuses are classified into a pulsator type that washes laundry by causing water streams generated by rotations of rotating blades including small blades in the bottom of a washing tub to collide with the laundry, an agitator type that washes laundry with water streams generated by regularly changing the rotation directions of large stirring blades having blades in the center of a washing tub, and a drum type that washes laundry with impacts generated by waterfalls and detergency of a detergent by rotating a drum accommodating the laundry, according to washing types.

A drum type of a clothes treating apparatus includes a cabinet, a tub installed inside the cabinet and accommodating washing water, a drum rotatably installed inside the tub and accommodating laundry, a driver for rotating the drum, a drain for discharging washing water from the drum to outside of the cabinet, and a dryer for drying laundry.

The dryer of the clothes treating apparatus includes a heater for heating air, a blower for circulating air, a duct forming a flow path of air, a filter positioned on the duct and configured to filter foreign materials included in air circulating inside the duct, and a cleaning nozzle for spraying water toward the filter to remove foreign materials collected in the filter.

However, a certain area of the filter may be not in contact with water sprayed from the cleaning nozzle or may be in contact with water of weak water pressure. In this case, foreign materials collected in the area may be not removed.

### [Disclosure]

### [Technical Problem]

It is an aspect of the disclosure to provide a clothes treating apparatus capable of improving filter cleaning efficiency by a cleaning nozzle.

It is an aspect of the disclosure to provide a clothes treating apparatus capable of cleaning the entire area of a filter.

It is an aspect of the disclosure to provide a clothes treating apparatus capable of increasing an area of a filter by positioning the filter on a circumferential surface of a tub.

### [Technical Solution]

In accordance with an aspect of the disclosure, a clothes treating apparatus includes: a cabinet; a tub inside the cabinet, being in a shape of a cylinder, and including an air outlet formed in a circumference of the tub and a tub duct protruding outward from the tub and configured to guide air discharged through the air outlet, the tub duct having a duct opening formed in a side of the tub duct; a filter case to which a filter is installed to filter a foreign material included in air passing through the air outlet, the filter case coupled to the tub duct; and a cleaning nozzle coupled to the tub duct, having one side corresponding to a shape of the air outlet, and inclined with respect to the tub duct to face the filter, the cleaning nozzle including a nozzle inserted into the tub duct through the duct opening to be positioned inside the tub duct and configured to spray water toward the filter, wherein the duct opening is in a shape of a quadrangle so that the nozzle which passes through the duct opening is fully exposed to the filter for the sprayed water to reach the filter.

The nozzle may extend along a first direction inclined with respect to the tub duct.

The first direction may be parallel to a tangent line to a point on the filter.

The duct opening may be formed by penetrating the tub duct along a second direction inclined with respect to the tub duct.

The first direction along which the nozzle extends may be perpendicular to the second direction.

The cleaning nozzle may further include a nozzle rib inserted in the duct opening to cover the duct opening.

The nozzle rib may have a quadrangle shape to prevent water sprayed from the nozzle from being blocked by the nozzle rib.

The clothes treating apparatus may further include a sealing member coupled with the nozzle rib and configured to seal between the nozzle rib and the duct opening.

The nozzle rib may include a separation preventing protrusion configured to press at least one portion of the sealing member to prevent the sealing member from departing from the nozzle rib, upon coupling of the sealing member with the nozzle rib.

The separation preventing protrusion may be caught by an inner surface of the tub duct upon coupling of the cleaning nozzle with the tub duct to prevent the cleaning nozzle from departing from the tub duct.

The filter case may include: a case body having in a shape corresponding to the tub duct and inserted into the tub duct; and a case opening formed in a side of the case body to correspond to the duct opening of the tub duct so that the nozzle is passed through the duct opening and the case opening.

The case opening may be in a shape of a quadrangle so that nozzle which passes through the duct opening and the case opening is fully exposed to the filter for the sprayed water to reach the filter.

The filter case may further include a case protrusion protruding from the case body toward the case opening.

Upon inserting of the filter case in the tub duct, the case protrusion may be pressed by the cleaning nozzle to prevent the filter case from departing from the tub duct.

The filter case may include a rotation preventing protrusion protruding from a top surface of the case body outward in a radial direction of the top surface of the case body.

The tub duct may include a rotation preventing groove depressed from at least one portion of a top surface of the tub duct and having a shape corresponding to a shape of the rotation prevention protrusion, so that the rotation preventing protrusion is inserted in the rotation preventing groove.

The filter case may include a support groove formed along a circumference of the filter in a bottom of the filter case.

The tub duct may include a support rib formed along a circumference of the air outlet and inserted into the support groove to support the filter case.

The filter case may further include a first support surface positioned at a lower end of the bottom of the filter case.

The tub duct may further include a second support surface corresponding to the first support surface and supporting the first support surface.

The filter case may include a first support surface positioned at a lower end of a bottom of the filter case, and a catching protrusion positioned at an upper end of the bottom of the filter case and protruding outward from the filter case.

The tub duct may include a second support surface corresponding to the first support surface and supporting the first support surface.

The filter case may be coupled with the tub duct by the first support surface supported by the second support surface and the catching protrusion caught by a circumferential surface of the tub.

The nozzle may include a first part of the nozzle is positioned outside the tub duct and a second part of the nozzle is positioned inside the tub duct, and both the first part of the nozzle and the second part of the nozzle may be fully exposed to the filter to spray water to the filter.

In accordance with an aspect of the disclosure, a clothes treating apparatus may include: a cabinet; a tub positioned inside the cabinet and including an air outlet; a tub duct protruding outward from an outer side of the tub and configured to guide air discharged through the air outlet, wherein a duct opening is formed in a side of the tub duct; a filter case including a filter covering the air outlet, the filter case inserted in the tub duct; and a cleaning nozzle including a nozzle passed through the duct opening to be positioned inside the tub duct, the cleaning nozzle coupled with the tub duct in such a way to be inclined with respect to the tub duct such that the nozzle faces the filter, wherein the cleaning nozzle is positioned such that a distance between the nozzle and the filter is a minimum at a third location of the nozzle between a first location of the nozzle, being closet to the duct opening, and a second location of the nozzle, being farthest from the duct opening.

In accordance with an aspect of the disclosure, a clothes treating apparatus may include a cabinet; a tub inside the cabinet, the tub including: an air outlet; a tub duct protruding outward from an outer side of the tub, and configured to guide air discharged through the air outlet, the tub duct having a duct opening formed in a side of the tub duct; a filter case to which a filter is installed, the filter case inserted in the tub duct; and a cleaning nozzle including a nozzle inserted into the tub duct through the duct opening to be positioned inside the tub duct, the cleaning nozzle coupled with the tub duct to be inclined with respect to the tub duct so that the nozzle faces the filter, wherein the nozzle has a first part, a second part, and a third part located between the first part and the second part, the first part is located close to the duct opening, and wherein the cleaning nozzle is positioned so that a distance between the nozzle and the filter is a minimum at a third part of the nozzle.

The first part of the nozzle may be positioned outside the tub duct and the second part of the nozzle is positioned inside the tub duct, and the first part of the nozzle, the second part of the nozzle, and the third part of the nozzle may be fully exposed to the filter to spray water to the filter.

### [Advantageous Effects]

According to an aspect of the disclosure, the clothes treating apparatus capable of improving filter cleaning efficiency by the cleaning nozzle may be provided.

According to an aspect of the disclosure, the clothes treating apparatus capable of cleaning the entire are of the filter may be provided.

According to an aspect of the disclosure, the clothes treating apparatus capable of increasing the area of the filter by positioning the filter on the circumferential surface of the tub may be provided.

### [Description of Drawings]

FIG. 1 is a perspective view of a clothes treating apparatus according to an embodiment of the disclosure;
FIG. 2 is a schematic side cross-sectional view of a clothes treating apparatus according to an embodiment of the disclosure;
FIG. 3 shows some components in a clothes treating apparatus according to an embodiment of the disclosure;
FIG. 4 is an enlarged view of an area A of FIG. 3 after some components are removed;
FIG. 5 is an exploded view of components shown in FIG. 4;
FIG. 6 is a view for describing a flow of air during a drying operation in a clothes treating apparatus according to an embodiment of the disclosure;
FIG. 7 is a cross-sectional view taken along B-B of FIG. 4;
FIG. 8 shows a filter case in a clothes treating apparatus according to an embodiment of the disclosure;
FIG. 9 shows a cleaning nozzle and a sealing member in a clothes treating apparatus according to an embodiment of the disclosure;
FIG. 10 is an exploded view of the cleaning nozzle and the sealing member of FIG. 9;
FIG. 11 shows the cleaning nozzle and the sealing member of FIG. 9 at another angle;
FIG. 12 shows the cleaning nozzle of FIG. 10 at another angle; and
FIG. 13 is a cross-sectional view of the clothes treating apparatus according to an embodiment of the disclosure, taken along line B-B of FIG. 4.

### [Modes of the Invention]

Configurations illustrated in the embodiments and the drawings described in the present specification are only the preferred embodiments of the present disclosure, and thus it is to be understood that various modified examples, which may replace the embodiments and the drawings described in the present specification, are possible when filing the present application.

Also, like reference numerals or symbols denoted in the drawings of the present specification represent members or components that perform the substantially same functions.

Also, the terms used in the present specification are merely used to describe the embodiments, and are not intended to limit and/or restrict the disclosure. It is to be understood that the singular forms "a," "an," and "the" include plural referents unless the context clearly dictates otherwise. It will be understood that when the terms "includes," "comprises," "including," and/or "comprising," when used in this specification, specify the presence of stated features, figures, steps, operations, components, members, or combinations thereof, but do not preclude the presence or addition of one or more other features, figures, steps, operations, components, members, or combinations thereof.

Also, it will be understood that, although the terms including ordinal numbers, such as "first", "second", etc., used in the present specification may be used to describe various components, these components should not be limited by these terms. These terms are only used to distinguish one component from another. For example, a first component could be termed a second component, and, similarly, a second component could be termed a first component, without departing from the scope of the disclosure. The term "and/or" includes any and all combinations of one or more of associated listed items.

Meanwhile, in the following description, the terms "front", "rear", "left", and "right" are defined based on the drawings, and the shapes and positions of the components are not limited by the terms.

Hereinafter, an embodiment of the disclosure will be described in detail with reference to the accompanying drawings.

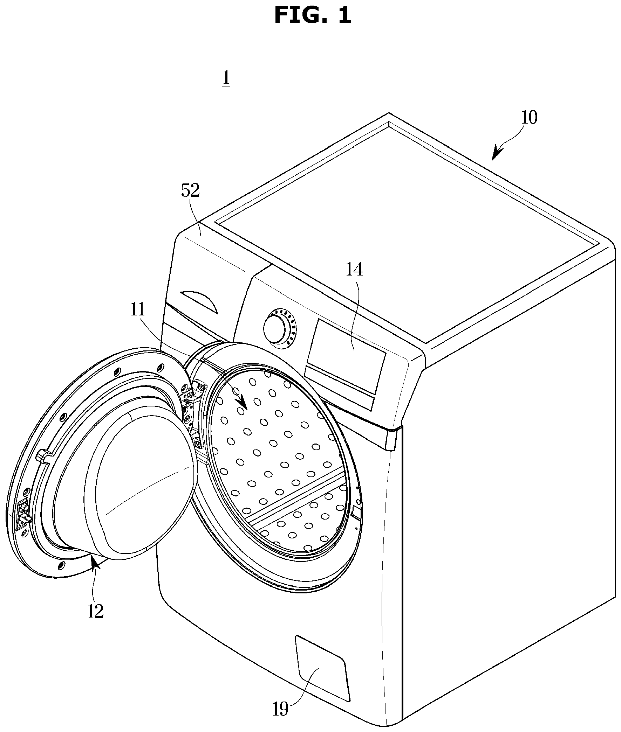

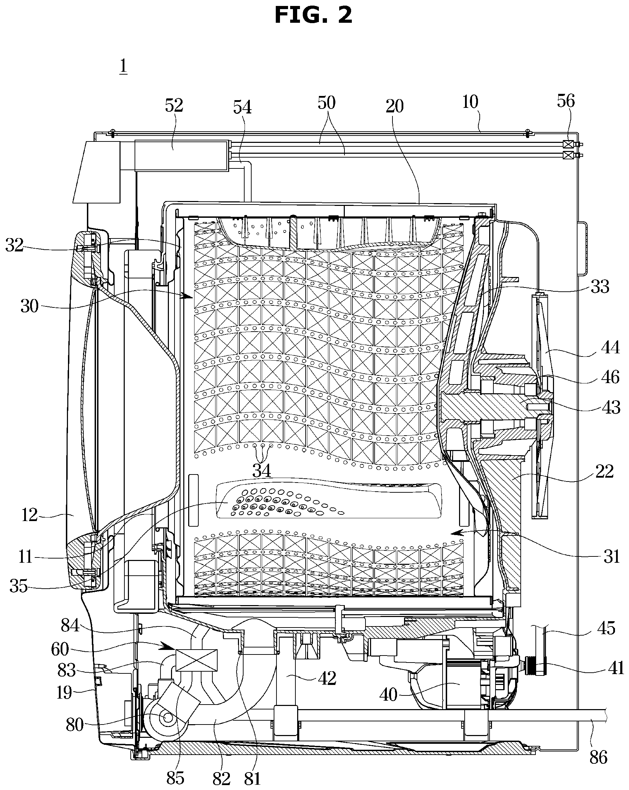

FIG. 1 is a perspective view of a clothes treating apparatus according to an embodiment of the disclosure. FIG. 2 is a schematic side cross-sectional view of a clothes treating apparatus according to an embodiment of the disclosure.

In the present specification, a clothes treating apparatus 1 may be a washing machine having a drying function.

Referring to FIGS. 1 and 2, the clothes treating apparatus 1 may include a cabinet 10 forming an outer appearance, a tub 20 positioned inside the cabinet 10, a drum 30 rotatably positioned inside the tub 20, and a driving motor 40 for driving the drum 30.

In a front side of the cabinet 10, an inlet 11 may be formed to allow a user to put laundry into the drum 30. The inlet 11 may be opened or closed by a door 12 installed on the front side of the cabinet 10.

Above the tub 20, a water supply pipe 50 for supplying washing water to the tub 20 may be installed. One side of the water supply pipe 50 may be connected with a water supply valve 56, and the other side of the water supply pipe 50 may be connected with a detergent case 52.

The detergent case 52 may be connected with the tub 20 through a connecting pipe 54. Water supplied through the water supply pipe 50 may be supplied to inside of the tub 20 together with a detergent via the detergent case 52.

The tub 20 may be supported by a damper 42. The damper 42 may connect an inner bottom of the cabinet 10 with an outer surface of the tub 20.

The drum 30 may include a cylinder portion 31, a front plate 32 positioned in front of the cylinder portion 31, and a rear plate 33 positioned behind the cylinder portion 31. In the front plate 32, an opening may be formed to allow a user to put laundry in the drum 30 or take laundry out of the drum 30, and a shaft 43 for transferring power from the driving motor 40 may be connected with the rear plate 33.

In a circumference of the drum 30, a plurality of through holes 34 may be formed to pass washing water, and a plurality of lifters 35 may be installed on an inner circumferential surface of the drum 30 to lift and drop laundry according to a rotation of the drum 30.

The drum 30 may be connected with the driving motor 40 through the shaft 43. There may be a direct driving type in which the driving motor 40 is connected directly with the shaft 43 to rotate the drum 30, and an indirect driving type in which a pulley 44 is connected between the driving motor 40 and the shaft 43 to drive the drum 30, according to connection types of the shaft 43 and the driving motor 40.

The clothes treating apparatus 1 according to an embodiment of the disclosure may be the indirect driving type, although not limited thereto. However, technical features of the disclosure may also be applicable to the direct driving type.

One end of the shaft 43 may be connected with the rear plate 33 of the drum 30, and the other end of the shaft 43 may extend to an outer side of a rear portion 22 of the tub 20. The other end of the shaft 43 may be inserted in the pulley 44 to obtain a driving force from the driving motor 40. Also, a motor pulley 41 may be formed at a rotating shaft of the driving motor 40. A driving belt 45 may be provided between the motor pulley 41 and the shaft pulley 44. The shaft 43 may be driven by the driving belt 45.

The driving motor 40 may be positioned at one side below the tub 20, and the driving belt 45 may rotate in a clockwise or counterclockwise direction toward an up-down direction of the tub 20 to rotate the shaft 43.

In the rear portion 22 of the tub 20, a bearing housing 46 may be installed to rotatably support the shaft 43. The bearing housing 46 may be formed of an aluminum alloy, and may be inserted into the rear portion 22 of the tub 20 upon injection-molding of the tub 20.

Meanwhile, in a front, upper portion of the cabinet 10, a display 14 may be provided to display a state of the clothes treating apparatus 1 for a user. The display 14 may include an inputter. In the front, upper portion of the cabinet 10, a printed circuit board assembly (not shown) may be provided.

In a front, lower portion of the cabinet 10, a cover 19 covering a filter apparatus 60 may be provided. The user may open the cover 19 to access the filter apparatus 60.

The clothes treating apparatus 1 may include a drain pump 80 positioned below the tub 20 to discharge water stored in the tub 20 to the outside of the clothes treating apparatus 1. To enable water stored in the tub 20 to enter the drain pump 80, the drain pump 80 may be connected with a drain 81 of the tub 20 through a connecting hose 82.

The clothes treating apparatus 1 may include the filter apparatus 60 for filtering water discharged from the drain pump 80. The filter apparatus 60 may be adjacent to the drain pump 80 below the tub 20. To supply water from the drain pump 80 to the filter apparatus 60, the filter apparatus 60 may be connected with the drain pump 80 through a first circulating hose 83 and a first drain hose 85. To enable water entered the filter apparatus 60 through the first circulating hose 83 to be filtered and then guided to the tub 20, the filter apparatus 60 may be connected with the tub 20 through a second circulating hose 84. To enable water entered the filter 60 through the first drain hose 85 to be filtered and then guided to the outside of the cabinet 10, the filter apparatus 60 may be connected with a second drain hose 86.

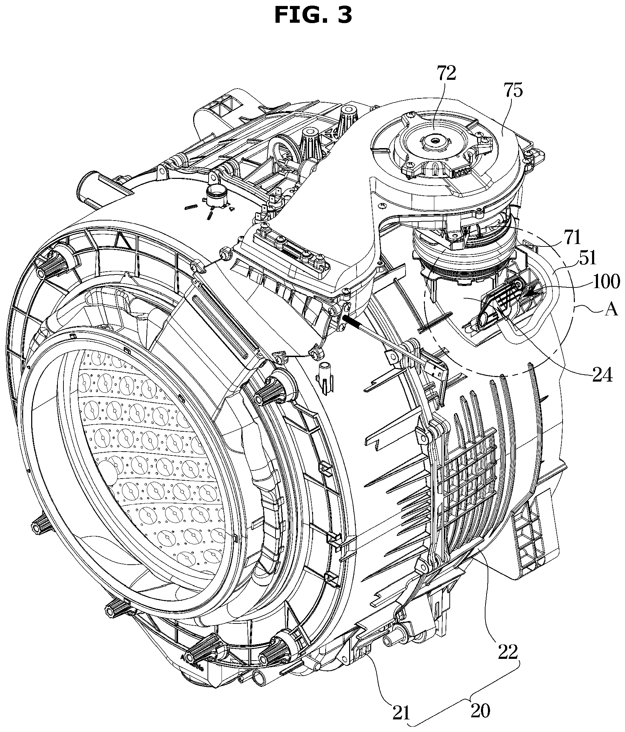

FIG. 3 shows some components in a clothes treating apparatus according to an embodiment of the disclosure.

Referring to FIG. 3, the tub 20 may include a front portion 21 and the rear portion 22. According to an embodiment of the disclosure, the tub 20 may be formed by coupling the front portion 21 of the tub 20 with the rear portion 22 of the tub 20.

In the rear portion 22 of the tub 20, a tub duct 24 which will be described below may be provided. The tub duct 24 may be connected with a water supply hose 51 connected with the water supply pipe 50. A cleaning nozzle 100 may be coupled with one end of the water supply hose 51.

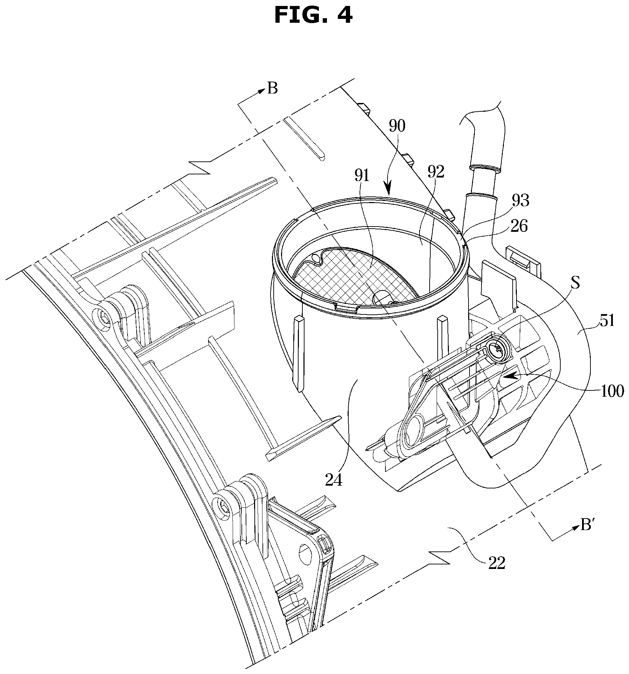

FIG. 4 is an enlarged view of an area A of FIG. 3 after some components are removed.

Referring to FIG. 4, the tub duct 24 may be provided in the rear portion 22 of the tub 20. The tub duct 24 may be formed by protruding upward from a circumferential surface of the rear portion 22 and form a flow path for guiding air.

A filter case 90 may be coupled with an inner surface of the tub duct 24. On a bottom of the filter case 90, a filter 91 for filtering foreign materials included in air may be provided.

The cleaning nozzle 100 may be coupled with the tub duct 24. The cleaning nozzle 100 may include a nozzle 101 positioned inside the tub duct 24 by penetrating the tub duct 24 and the filter case 90.

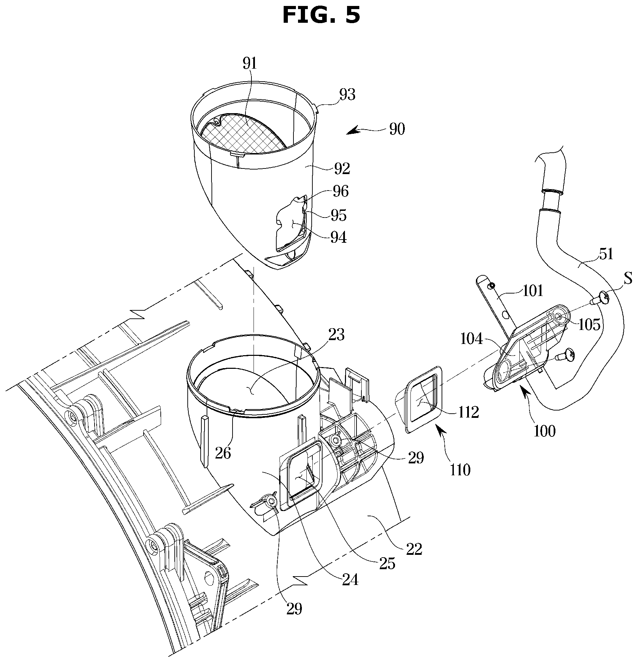

FIG. 5 is an exploded view of components shown in FIG. 4.

Hereinafter, components shown in FIG. 4 will be described in detail with reference to FIG. 5.

The rear portion 22 of the tub 20 may be in a shape of a cylinder. The rear portion 22 may include an air outlet 23 formed in the circumference. The air outlet 23 may be formed by boring a hole in the circumference of the rear portion 22 of the tub 20. The air outlet 23 may be positioned at an upper area of the rear portion 22. Inside air of the drum 30 may be discharged to the outside of the tub 20 through the air outlet 23 via the tub 20. Details about a flow of air will be described below.

The air outlet 23 may have a curved shape because the air outlet 23 is formed by boring a hole in the circumference of the tub 20. The air outlet 23 may be substantially in a shape of an oval as seen from above the tub 20. A side cross section of the air outlet 23 may be in a shape of an arc.

The tub duct 24 may be formed by protruding outward from the tub 20. The tub duct 24 may be formed by an edge of the air outlet 23, which protrudes upward. The tub duct 24 may guide air discharged through the air outlet 23 upward.

The tub duct 24 may include a duct opening 25. The duct opening 25 may be formed by boring a hole in a portion of the tub duct 24. The duct opening 25 may be formed by slopingly penetrating the tub duct 24 in an oblique direction. In other words, the duct opening 25 may form a passage that connects inside of the tub duct 24 with outside of the tub duct 24. The passage may extend in such a way as to be inclined downward from the outside of the tub duct 24 toward the inside of the tub duct 24.

The duct opening 25 may be in a shape of a quadrangle such that the entire of water sprayed from the cleaning nozzle 100 which will be described below passes through the duct opening 25 and reaches the filter 91.

In a top surface of the tub duct 24, a rotation preventing groove 26 in which a rotation preventing protrusion 93 of the filter case 90, which will be described below, is inserted may be formed. By inserting the rotation preventing protrusion 93 in the rotation preventing groove 26, the filter case 90 may be prevented from rotating inside the tub duct 24.

A coupling portion 29 with which a coupling member S is coupled to couple the cleaning nozzle 100 with the rear portion 22 of the tub 20 may be provided to both sides of the duct opening 25. The coupling portion 29 may be in a shape of a boss for accommodating the coupling member S, as shown in FIG. 5.

The filter case 90 may be coupled with the tub duct 24. The filter case 90 may include the filter 91 at the bottom. The filter 91 may have a shape corresponding to the air outlet 23 to cover the air outlet 23. Accordingly, the filter 91 may be substantially in a shape of an oval as seen from above the filter case 90, and a side cross section of the filter 91 may be in a shape of an arc.

The filter case 90 may be in a shape of a cylinder of which the bottom is inclined. The filter case 90 may be inserted into the tub duct 24. By inserting the filter case 90 into the tub duct 24 and coupling the filter case 90 with the tub duct 24, the filter 91 may cover the air outlet 23.

The filter case 90 may include the filter 91, a case body 92 being in a shape of a cylinder and supporting the filter 91, the rotation preventing protrusion 93 formed in a top surface of the case body 92, and a case opening 94 penetrating the case body 92. In the case opening 94, a case protrusion 95 and a case groove 96 may be provided.

As described above, the filter 91 may cover the air outlet 23 to filter foreign materials included in air passing through the air outlet 23. The filter 91 may have a shape corresponding to the air outlet 23 to cover the air outlet 23.

The case body 92 may be in a shape of a cylinder of which the bottom is inclined. In the top surface of the case body 92, the rotation preventing protrusion 93 may be provided. According to an embodiment of the disclosure, the rotation preventing protrusion 93 may protrude from the top surface of the case body 92 outward in a radial direction of the case body 92. Also, a plurality of rotation preventing protrusions 93 may be arranged at intervals along a circumferential direction of the case body 92. Referring to FIG. 5, the filter case 90 may include three rotation preventing protrusions 93, although not limited thereto. However, one or more rotation preventing protrusions 93 may be provided.

The case opening 94 may correspond to the duct opening 25. The case opening 94 may be in a shape of a quadrangle such that the entire of water sprayed from the cleaning nozzle 100 passes through the case opening 94 and reaches the filter 91. However, the shape of the case opening 94 may be a little different from a normal quadrangle because the case opening 94 includes the case protrusion 95 and the case groove 96, which will be described below. The nozzle 101 of the cleaning nozzle 100 may penetrate the duct opening 25 and the case opening 94 to be positioned on a flow path formed inside the tub duct 24.

The case protrusion 95 may be pressed by a nozzle rib 103 of the cleaning nozzle 100 or a sealing rib 111 of a sealing member 110. Because the case protrusion 95 is pressed by the nozzle rib 103 or the sealing rib 111, the filter case 90 may be prevented from departing from the tub duct 24.

The case groove 96 may be provided as a groove being substantially in a shape of an arc to correspond to an upper shape of the nozzle 10. The nozzle 101 may be inserted in the case groove 96. The case groove 96 may be provided to avoid interference between the case opening 94 and the nozzle 101.

The cleaning nozzle 100 may remove foreign materials such as lint collected in the filter 91 by spraying water onto the filter 91. In other words, the cleaning nozzle 100 may clean the filter 90 by spraying water onto the filter 91.

The cleaning nozzle 100 may include the nozzle 101 for receiving water from the water supply hose 51 and spraying the water, a nozzle body 104 supporting the nozzle 101 and coupling the nozzle 101 with the rear portion 22 of the tub 20, and a coupling hole 105 formed by boring a hole in a portion of the nozzle body 104, wherein a coupling member S may penetrate the coupling hole 105.

The clothes treating apparatus 1 may include the sealing member 110 for sealing a gap between the cleaning nozzle 100 and the duct opening 25. The sealing member 110 may include a cavity 112 having a shape corresponding to the nozzle rib 103 of the cleaning nozzle 100 which will be described below.

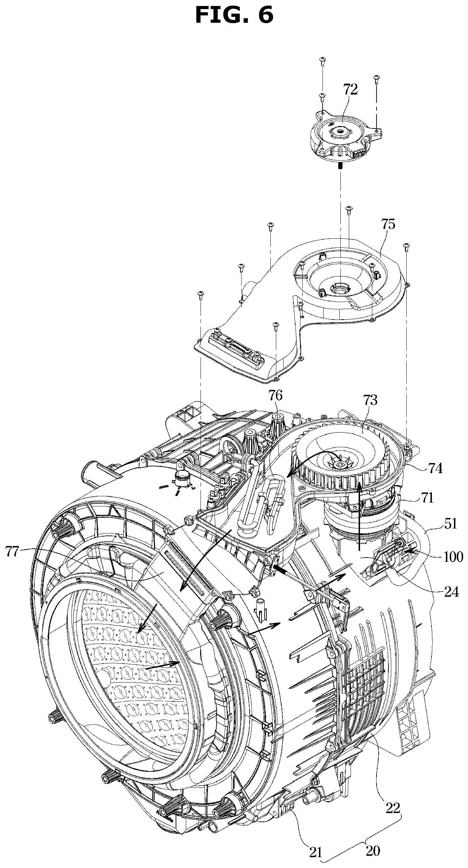

FIG. 6 is a view for describing a flow of air during a drying operation in a clothes treating apparatus according to an embodiment of the disclosure.

Hereinafter, a flow of air during a drying operation in the clothes treating apparatus 1 according to an embodiment of the disclosure will be described with reference to FIG. 6.

Referring to FIG. 6, the clothes treating apparatus 1 may include a dryer. The dryer may dry laundry accommodated inside the drum 30.

The dryer may supply hot and dry air to the inside of the drum 30, change cold and humid air passed through the inside of the drum 30 to hot and dry air, and then again supply the hot and dry air to the inside of the drum 30. Through air circulation of supplying hot and dry air to the inside of the drum 30 and discharging cold and humid air from the drum 30, laundry accommodated inside the drum 30 may be dried.

The dryer may include the tub duct 24, a connecting duct 71, a fan 73, a motor 72 for rotating the fan 73, upper ducts 74 and 75, and a heater 76, and a front duct 77.

According to a rotation of the fan 73 by a driving force of the motor 72, inside air of the drum 30 may move to the tub 20 through the plurality of through holes 34 and then be discharged through the air outlet 23. The air discharged through the air outlet 23 may move to the upper ducts 74 and 75 via the tub duct 24 and the connecting duct 71. The air entered the upper ducts 74 and 75 may pass through the heater 76 to thus be raised in temperature, and enter the drum 30 via the front duct 77.

Hot and dry air entered the inside of the drum 30 may change to cold and humid air by passing through laundry, and the cold and humid air may be condensed by water of low temperature flowing along a rear wall of the rear portion 22 of the tub 20 to become cold and dry air.

The cold and dry air may enter the upper ducts 74 and 75 via the air outlet 23, the tub duct 24, and the connecting duct 71, and pass through the heater 76 inside the upper ducts 74 and 75 to thereby become hot and dry air.

The clothes treating apparatus 1 may dry laundry accommodated inside the drum 30 by repeating the above-described process.

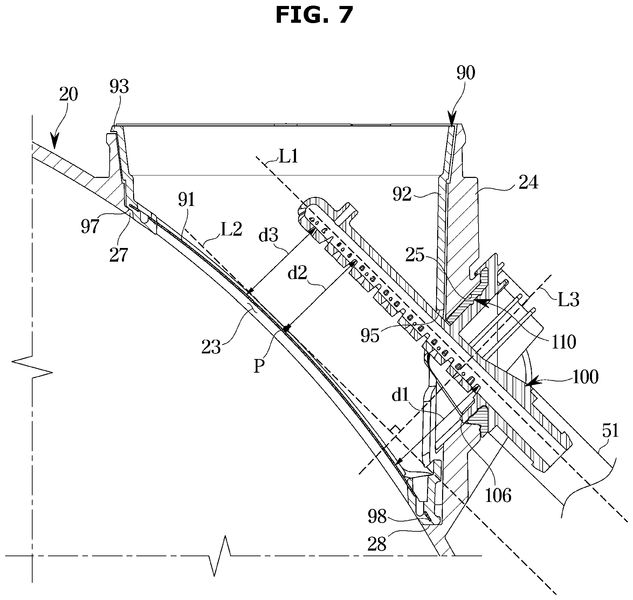

FIG. 7 is a cross-sectional view taken along B-B of FIG. 4.

An arrangement and structural features of the tub duct 24, the filter case 90, the cleaning nozzle 100, and the sealing member 110 will be described in detail with reference to FIG. 7.

As described above, the cleaning nozzle 100 may be coupled with the tub duct 24 such that the nozzle 101 is positioned on a flow path formed inside the tub duct 24. In this case, the sealing member 101 may be positioned between the cleaning nozzle 100 and the tub duct 24 to seal the inside of the tub duct 24 from the outside.

The nozzle 101 may be inclined with respect to the tub duct 24. The nozzle 101 may extend along a first direction, and include a plurality of water spraying holes 102. The nozzle 101 may extend to be parallel to a tangent line to a point P on the filter 91.

Referring to FIG. 7, a straight line L1 being parallel to the first direction in which the nozzle 101 extends may be parallel to a tangent line L2 to the point P on the filter 91. In the present specification, the meaning of "parallel" may include mathematically parallel and substantially parallel not mathematically parallel.

In other words, the nozzle 101 may be inclined with respect to the tub duct 24 to face the filter 91. Because the nozzle 101 is inclined with respect to the tub duct 24 to face the filter 91, a distance d1 between the filter 91 and the water spraying holes 102 positioned at one end of the nozzle 101, a distance d3 between the filter 91 and the water spraying holes 102 positioned at the other end of the nozzle 101, and a distance d2 between the filter 91 and the water spraying holes 102 positioned at a location facing the point P may be similar to each other. That is, the distances d1, d2, and d3 may not have a substantial difference that may make any difference in filter cleaning ability, although the distances d1, d2, and d3 are a little different from each other. In other words, the cleaning nozzle 100 may have uniform cleaning ability from the one end of the nozzle 101 to the other end.

However, in regard of distances between the filter 91 and the nozzle 101, a location of the nozzle 101, being closet to the duct opening 25, is referred to as a first location, a location of the nozzle 101, being farthest from the duct opening 25, is referred to as a second location, and an arbitrary location of the nozzle 101 between the first location and the second location is referred to as a third location. In this case, at the third location of the nozzle 101, the nozzle 101 may be spaced a shortest distance from the filter 91. Referring to FIG. 7, the distance d2 between the nozzle 101 and the filter 91 at the third location may be shorter than the distance d1 between the nozzle 101 and the filter 91 at the first location. Also, the distance d2 between the nozzle 101 and the filter 91 at the third location may be shorter than the distance d3 between the nozzle 101 and the filter 91 at the second location.

Although the air outlet 23 and the filter 91 are provided in the circumference of the tub 20 to be curved, the nozzle 101 may be positioned horizontally. In this case, at one end of the nozzle 101, being close to the water supply nozzle 51, a distance between the water spraying holes 102 and the filter 91 may be relatively long, and at the other end of the nozzle 101, being distant from the water supply nozzle 51, a distance between the water spraying holes 102 and the filter 91 may be relatively short. In this case, it may be difficult to completely clean the filter 91 because the distance between the water spraying holes 102 at the one end of the nozzle 101 and the filter 91 is long.

According to an embodiment of the disclosure, the nozzle 101 may be inclined with respect to the tub duct 24 to face the filter 91. Because the nozzle 101 is inclined, as described above, distances between the water spraying holes 102 and the filter 91 from one end of the nozzle 101 to the other end may be similar to each other. Accordingly, uniform filter cleaning ability from the one end of the nozzle 101 to the other end may be achieved.

The duct opening 25 may be formed by penetrating the tub duct 24 in the oblique direction. More specifically, the duct opening 25 may be formed by penetrating the tub duct 24 from the outside toward the inside. In other words, the duct opening 25 may be formed by penetrating the tub duct 24 along a third direction. The duct opening 25 may extend in the third direction.

According to an embodiment of the disclosure, a straight line L3 being parallel to the first direction in which the duct opening 25 extends may be perpendicular to the straight line L1 being parallel to the first direction in which the nozzle 101 extends. In the present specification, the meaning of "perpendicular" may include mathematically perpendicular and substantially perpendicular not mathematically perpendicular.

As shown in FIG. 7, the duct opening 25 may extend in the third direction inclined with respect to the tub duct 24. The duct opening 25 may form a passage extending in the third direction and penetrating the tub duct 24. The sealing rib 111 (which will be described below) of the sealing member 110 may extend in the third direction. The nozzle rib 103 of the cleaning nozzle 100 may extend in the third direction. Accordingly, the sealing member 110 and the nozzle rib 103 may seal the duct opening 25 to prevent air from being discharged through the duct opening 25.

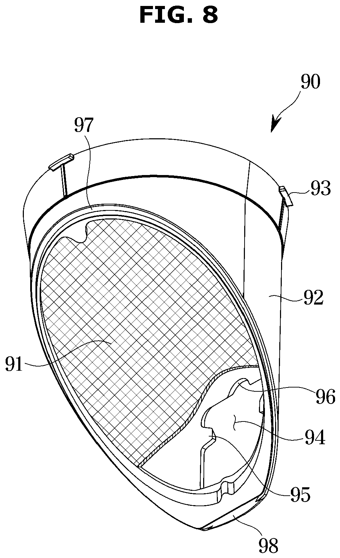

FIG. 8 shows a filter case in a clothes treating apparatus according to an embodiment of the disclosure.

Referring to FIGS. 7 and 8, the filter case 90 may include a support groove 97 formed along a circumference of the filter 91 in the bottom of the filter case 90. Also, the filter case 90 may include a first support surface 98 positioned at a lower end of the bottom of the filter case 90. The first support surface 98 may be an area being horizontal to the ground in the bottom of the filter case 90.

The tub duct 24 may include a support rib 27 positioned along a circumference of the air outlet 23 and inserted in the support groove 97. Also, the tub duct 24 may include a second support surface 28 corresponding to the first support surface 98 to support the first support surface 98.

According to inserting of the filter case 90 into the tub duct 24, the rotation preventing protrusion 93 may be inserted into the rotation preventing groove 26 to prevent the filter case 90 from rotating. Also, according to inserting of the filter case 90 into the tub duct 24, the support rib 27 of the tub duct 24 may be inserted in the support groove 97 of the filter case 90, and accordingly, the filter case 90 may be prevented from penetrating the air outlet 23. Likewise, according to inserting of the filter case 90 into the tub duct 24, the first support surface 98 of the filter case 90 may be supported by the second support surface 28 of the tub duct 24, and accordingly, the filter case 90 may be prevented from penetrating the air outlet 23. That is, because the support rib 27 is inserted in the support groove 97 and the first support surface 98 is supported by the second support surface 28, the filter case 90 may be rested inside the tub duct 24.

Referring to FIG. 8, the filter case 90 may include the case opening 94, the case protrusion 95 formed in the case opening 94, and the case groove 96.

The case protrusion 95 may protrude from the case body 92 toward the case opening 94. According to an embodiment of the disclosure, the case protrusion 95 may be formed at both sides of the case opening 94.

The case protrusion 95 may be pressed by the cleaning nozzle 100 or the sealing member 110 upon inserting of the filter case 90 into the tub duct 24. Because the case protrusion 95 is pressed by the cleaning nozzle 100 or the sealing member 110, the filter case 90 may be prevented from departing from the tub duct 24.

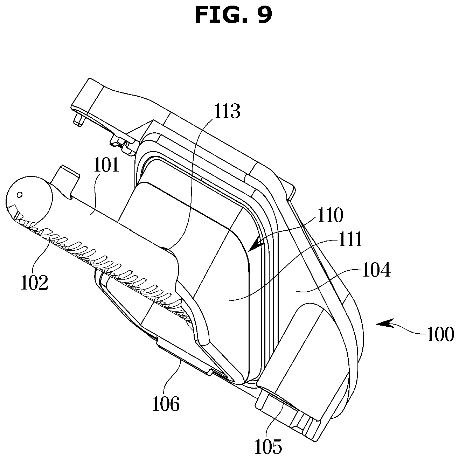

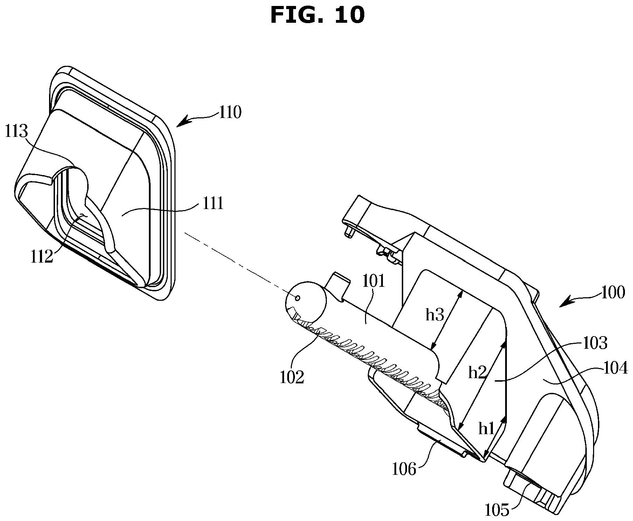

According to an embodiment of the disclosure, a filter case and a tub duct may be integrated into one body. In the embodiment of the disclosure, no filter case may be provided. A filter may be installed directly in the tub duct to cover an air outlet. A nozzle of a cleaning nozzle may pass through a duct opening to be positioned inside the tub duct. FIG. 9 shows a cleaning nozzle and a sealing member in a clothes treating apparatus according to an embodiment of the disclosure. FIG. 10 is an exploded view of the cleaning nozzle and the sealing member of FIG. 9.

Referring to FIGS. 9 and 10, the sealing member 110 may be elastically coupled with the cleaning nozzle 100 to seal between the cleaning nozzle 100 and the duct opening 25. The cleaning nozzle 100 may include the nozzle 101 including the water spraying holes 102, the nozzle rib 103 inserted in the duct opening 25 to cover the duct opening 25, the nozzle body 104 for coupling the nozzle 101 with the tub duct 24, the coupling hole 105 provided in the nozzle body 104, and a separation preventing protrusion 106 formed on the nozzle rib 103.

The nozzle rib 103 may surround an entrance of the nozzle 101. The nozzle rib 103 may be inserted in the duct opening 25, and extend in the same direction as the duct opening 25, as described above.

The nozzle rib 103 may have a shape corresponding to the duct opening 25. The nozzle rib 103 may be in a shape of a quadrangle to prevent water sprayed from the nozzle 101 from being blocked by the nozzle rib 103. An area of the nozzle 101, in which the water spraying holes 102 are formed, is referred to as a bottom of the nozzle 101. The nozzle rib 103 may be in a shape of a quadrangle as seen from below the bottom of the nozzle 101.

The nozzle rib 103 may have different heights according to distances from the entrance of the nozzle 101. The entrance of the nozzle 101 may be one end of the nozzle 101, at which water enters the nozzle 101 from the water supply hose 51. A height of the nozzle rib 130 may be an extension length from a lower end of the nozzle rib 103 to the nozzle body 104. In other words, the height of the nozzle rib 103 may indicate a protrusion length from the nozzle body 104 to the lower end of the nozzle rib 103.

The nozzle rib 103 may have different heights according to distances from the entrance of the nozzle 101 such that the nozzle 101 is inclined with respect to the nozzle body 104. The nozzle rib 103 may have a first height h1 at the entrance of the nozzle 101 at which water enters the nozzle 101. The nozzle rib 103 may have a third height h3 at a location that is farthest from the entrance of the nozzle 101. The nozzle rib 103 may have a second height h2 at a location spaced a certain distance from the entrance of the nozzle 101.

The height of the nozzle rib 103 may increase and then decrease as the nozzle rib 103 is farther away from the entrance of the nozzle 101. Referring to FIG. 10, the second height h2 of the nozzle rib 103 may be greater than the first height h1. The second height h2 of the nozzle rib 103 may be greater than the third height h3. The third height h3 of the nozzle rib 103 may be greater than the first height h1. The height of the nozzle rib 103 may satisfy h2>h3>h1. Because the height of the nozzle rib 103 changes according to the distance from the entrance of the nozzle 101, the nozzle 101 may be inclined with respect to the nozzle body 104.

Referring to FIG. 7, the separation preventing protrusion 106 may be caught by the inner surface of the tub duct 24 upon coupling of the cleaning nozzle 100 with the tub duct 24 to prevent the cleaning nozzle 100 from departing from the tub duct 24. That is, the separation preventing protrusion 106 may prevent the cleaning nozzle 100 from departing from the tub duct 24.

The sealing member 110 may include the sealing rib 111 corresponding to the nozzle rib 103 to surround the nozzle rib 103, the cavity 112 through which the nozzle 101 penetrate the sealing member 110, and a sealing groove 113 having a shape corresponding to an upper portion of the nozzle 101. Because the nozzle 101 is inserted in the sealing groove 113, no gap may be made between the nozzle 101 and the sealing rib 111. That is, the sealing groove 113 may seal between the nozzle 101 and the sealing rib 111.

Referring to FIGS. 7 and 9, one side of the sealing member 110 may be supported by the nozzle 101, and the other side of the sealing member 110 may be supported by the nozzle rib 103 including the separation preventing protrusion 106. The one side of the sealing member 110 may be one portion of the sealing member 110, positioned above the nozzle 101, as seen in FIG. 7. The other side of the sealing member 110 may be one portion of the sealing member 110, positioned below the nozzle 101, as seen in FIG. 7.

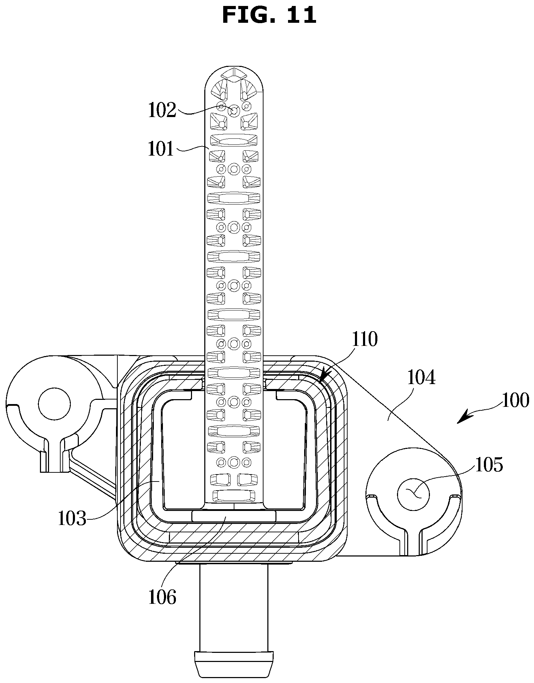

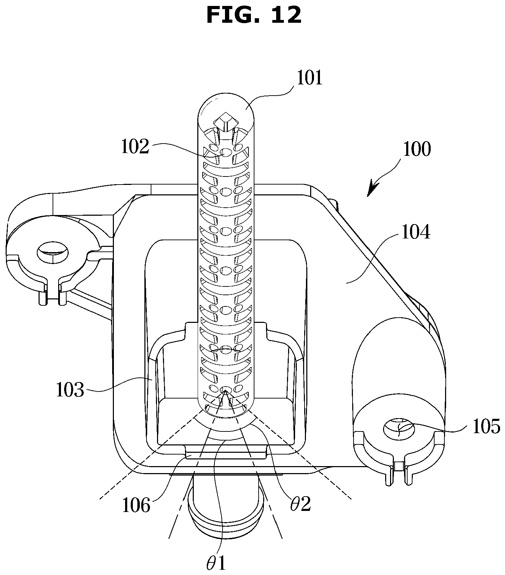

As shown in FIG. 7, upon coupling of the cleaning nozzle 100 with the tub duct 24, the nozzle rib 103 may extend to be parallel to the third direction L3 in which the duct opening 25 extends. In a case in which the nozzle rib 103 extends in a horizontal direction, the other side of the sealing member 110 may move in the horizontal direction and accordingly, the sealing member 110 may depart from the cleaning nozzle 100. According to an embodiment of the disclosure, the nozzle rib 103 may extend in the third direction L3, not in the horizontal direction, to limit a movement in horizontal direction of the other side of the sealing member 110, thereby preventing the sealing member 110 from departing from the cleaning nozzle 100. FIG. 11 shows the cleaning nozzle and the sealing member of FIG. 9 at another angle. FIG. 12 shows the cleaning nozzle of FIG. 10 at another angle.

A technical effect obtained by the quadrangle shape of the nozzle rib 103, the case opening 94, and the duct opening 25 will be described in detail with reference to FIGS. 11 and 12. The quadrangle shape may include a normal quadrangle with right-angled corners, a quadrangle with round corners, and a quadrangle of which all or some of four sides are curved. Also, the quadrangle shape may include both a square and a rectangle.

Referring to FIG. 12, a minimum spraying angle of water that is sprayed from the nozzle 101 through the water spraying holes 102 is 01. Water may be sprayed within a maximum range of θ2 through the water spraying holes 102.

Under an assumption that water is sprayed within a range of 180 ° through the water spraying holes 102, a minimum spraying angle at which water sprayed from the water spraying holes 102 meets the nozzle rib 103 is assumed as θ1.

In a case in which θ2 is greater than θ1, water sprayed through the water spraying holes 102 may not meet the nozzle rib 103. In other words, in the case in which θ2 is greater than θ1, water sprayed through the water spraying holes 102 may be not blocked by the nozzle rib 103. In another expression, in the case in which θ2 is greater than θ1, a traveling path of water sprayed through the water spraying holes 102 may be not limited by the nozzle rib 103. Because the entire of water sprayed through the water spraying holes 102 passes through the nozzle rib 103 to arrive at the filter 91, filter cleaning ability of the cleaning nozzle 100 may not deteriorate.

In a case in which the nozzle rib 103 is in a shape of a circle, not a quadrangle, an area where θ2 is smaller than in the shape of the quadrangle may be generated. Because the plurality of water spraying holes 102 are provided along the direction in which the nozzle 101 extends, water sprayed from the water spraying holes 102 may be not blocked by the nozzle rib 103 in the case in which θ2 is greater than θ1 at all the water spraying holes 102. In the case in which the nozzle rib 103 is in a shape of a circle, θ1 may be greater than θ2 at some of the water spraying holes 102, and accordingly, water sprayed from the water spraying holes 102 may be blocked by the nozzle rib 103. As a result of blocking of water sprayed from the water spraying holes 102 by the nozzle rib 103, filter cleaning ability of the cleaning nozzle 100 may deteriorate.

In the cleaning nozzle 100 according to an embodiment of the disclosure, θ2 may be greater than θ1 at each of the plurality of water spraying holes 102. Also, the nozzle rib 103, the case opening 94, and the duct opening 25 may be in a shape of a quadrangle such that the entire of water sprayed from each of the plurality of water spraying holes 102 reaches the filter 91. The entire of water sprayed from each of the plurality of water spraying holes 102 may reach the filter 91 by passing through the nozzle rib 103, the case opening 94, and the duct opening 25. Accordingly, filter cleaning ability of the cleaning nozzle 100 may be improved.

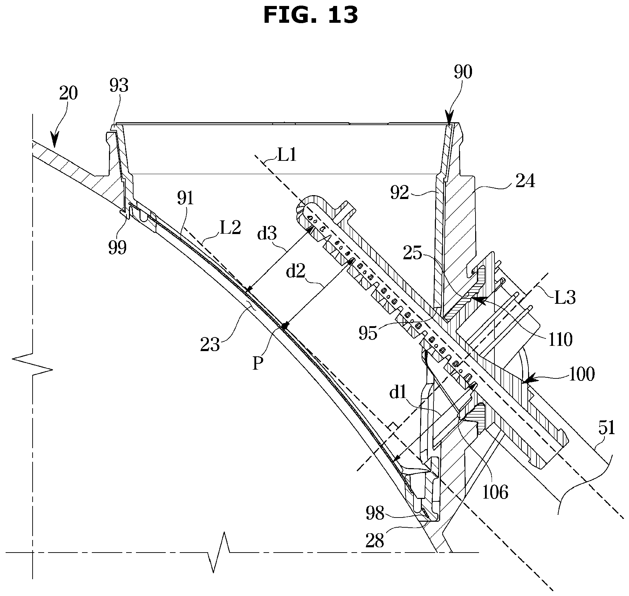

FIG. 13 is a cross-sectional view of the clothes treating apparatus according to an embodiment of the disclosure, taken along line B-B of FIG. 4.

Referring to FIG. 13, the filter case 90 according to an embodiment of the disclosure may include a catching protrusion 99. The catching protrusion 99 may be positioned at an upper end of the bottom of the filter case 90. Also, the catching protrusion 99 may protrude outward from the filter case 90.

Upon inserting of the filter case 90 in the tub duct 24, the first support surface 98 may be supported by the second support surface 28, and the catching protrusion 99 may be elastically deformed and caught by the circumferential surface of the tub 20. Thereby, the lower end of the bottom of the filter case 90 may be supported by the first support surface 98 and the second support surface 28, and the upper end of the bottom of the filter case 90 may be supported by the catching protrusion 99. Because the catching protrusion 99 is caught by the circumferential surface of the tub 20, the filter case 90 may be prevented from departing from the tub duct 24.

So far, specific embodiments have been shown and described. However, the disclosure is not limited to the above-described embodiments, and various modifications can be made by those skilled in the art without departing from the gist of the technical idea of the disclosure defined by the claims below.

## Claims

1. A clothes treating apparatus comprising:
a cabinet;
a tub inside the cabinet, having a shape of a cylinder, and including:
an air outlet formed in a circumference of the tub; and
a tub duct protruding outward from the tub and configured to guide air discharged through the air outlet, the tub duct having a duct opening formed in a side of the tub duct;
a filter case to which a filter is installed to filter a foreign material included in air passing through the air outlet, the filter case coupled to the tub duct; and
a cleaning nozzle coupled to the tub duct, having one side corresponding to a shape of the air outlet, and inclined with respect to the tub duct to face the filter, the cleaning nozzle including a nozzle inserted into the tub duct through the duct opening to be positioned inside the tub duct and configured to spray water toward the filter,
wherein the duct opening has a quadrangular shape so that the nozzle which passes through the duct opening is fully exposed to the filter for the sprayed water to reach the filter.

2. The clothes treating apparatus of claim 1, wherein the nozzle extends along a first direction inclined with respect to the tub duct, and the first direction is parallel to a tangent line to a point on the filter.

3. The clothes treating apparatus of claim 2, wherein the duct opening is formed by passing through the tub duct along a second direction inclined with respect to the tub duct.

4. The clothes treating apparatus of claim 3, wherein the first direction along which the nozzle extends is perpendicular to the second direction.

5. The clothes treating apparatus of claim 1, wherein the cleaning nozzle further comprises a nozzle rib inserted in the duct opening to cover the duct opening, and
the nozzle rib has a quadrangle shape to prevent water sprayed from the nozzle from being blocked by the nozzle rib.

6. The clothes treating apparatus of claim 5, further comprising a sealing member coupled with the nozzle rib to seal between the nozzle rib and the duct opening.

7. The clothes treating apparatus of claim 6, wherein the nozzle rib comprises a separation preventing protrusion configured to press at least one portion of the sealing member to prevent the sealing member from being separated from the nozzle rib when the sealing member is coupled to the nozzle rib.

8. The clothes treating apparatus of claim 7, wherein the separation preventing protrusion is caught by an inner surface of the tub duct when the cleaning nozzle is coupled to the tub duct to prevent the cleaning nozzle from being separated from the tub duct.

9. The clothes treating apparatus of claim 1, wherein the filter case comprises:
a case body having a shape corresponding to the tub duct and inserted into the tub duct; and
a case opening formed in a side of the case body to correspond to the duct opening of the tub duct so that the nozzle is passed through the duct opening and the case opening.

10. The clothes treating apparatus of claim 9, wherein the case opening has a quadrangular shape so that the nozzle which passes through the duct opening and the case opening is fully exposed to the filter for the sprayed water to reach the filter.

11. The clothes treating apparatus of claim 9, wherein the filter case further comprises a case protrusion protruding from the case body toward the case opening, and
when the filter case is inserted in the tub duct, the case protrusion is pressed by the cleaning nozzle to prevent the filter case from being separated from the tub duct.

12. The clothes treating apparatus of claim 9, wherein the filter case comprises a rotation preventing protrusion protruding from a top surface of the case body outward in a radial direction of the top surface of the case body,
the tub duct comprises a rotation preventing groove depressed from at least one portion of a top surface of the tub duct and having a shape corresponding to a shape of the rotation prevention protrusion so that the rotation preventing protrusion is inserted into the rotation preventing groove.

13. The clothes treating apparatus of claim 1, wherein the filter case comprises a support groove formed along a circumference of the filter in a bottom of the filter case, and
the tub duct comprises a support rib formed along a circumference of the air outlet and inserted into the support groove to support the filter case.

14. The clothes treating apparatus of claim 13, wherein the filter case further comprises a first support surface positioned at a lower end of the bottom of the filter case, and
the tub duct further comprises a second support surface corresponding to the first support surface and supporting the first support surface.

15. The clothes treating apparatus of claim 1, wherein the filter case comprises a first support surface positioned at a lower end of a bottom of the filter case, and a catching protrusion positioned at an upper end of the bottom of the filter case and protruding outward from the filter case,
the tub duct comprises a second support surface corresponding to the first support surface and supporting the first support surface, and
the filter case is coupled with the tub duct by the first support surface supported by the second support surface, and the catching protrusion caught by a circumferential surface of the tub.
